# EUROPEAN PATENT APPLICATION

(11) **EP 1 610 083 A1**
(43) Date of publication of application: **28.12.2005**
(21) Application number: 04014749.8
(22) Date of filing: 23.06.2004
(51) Int. Cl.: F28D 15/02, F28F 19/00, C09K 5/04

(54) **Energy-conducting pipe for rapid energy conduction**

(71) Applicant: Hsien, Chin-Chan, Nantou City (TW)
(72) Inventor: Hsien, Chin-Chan, Nantou City (TW)
(74) Representative: Viering, Jentschura & Partner

(57) **Abstract**

An energy-conducting pipe for rapid energy conduction is provided. The energy-conducting pipe is a hollow stainless steel pipe which is passivation treated and can accommodate a filler thereinside. The filler is a refrigerant or a filler comprising a methanol, an ethanol and a pure water in a proper proportion and is disposed into said pipe through a high pressure accommodation or a siphon, wherein the filler has a composition of a methanol of approximately 30 wt%, an ethanol of approximately 40 wt% and a pure water of approximately 30 wt%. Through a direct contact between the liquid filler and the inner wall of the energy-conducting pipe, the heat perpendicular to a flowing direction of the filler will pass through the interior of the filler, and further through the temperature variation along the flowing direction caused by the flow of the liquid filler, the temperature gradient of the inner wall of the pipe can be increased. Therefore, because the description above, a conduction device with rapid heat transferring can be obtained.

## Description

### BACKGROUND OF THE INVENTION

### 1. Field of the invention

The present invention is related to an energy-conducting pipe for rapid energy conduction, and more particular to a high efficiency conduction device comprising a stainless steel energy-conducting pipe with a liquid filler filled thereinside. Through a thermal heat transfer between the liquid filler and an inner wall of the stainless steel pipe, the high efficiency conduction can be achieved.

### 2. DESCRIPTION OF THE PRIOR ART

In the nature world, thermal heat transfer is a phenomenon that is widely existed. Only if a temperature difference exists between two objects or between two portions of one single object, the thermal heat transfer will be arisen. In the chemical engineering process, the processes regarding rising, cooling down or keeping the temperature of the material all are involved in thermal heat transfer.

In most chemical engineering processes, it always requires that the flux of thermal energy to be large so as to reduce a use of the heat exchanging equipment and also benefit a thermal energy utilization. Another condition is that, regarding the problem of temperature keeping, for avoiding heat dispersion or keeping at a low temperature, the flux of the thermal energy is requested to be as small as possible. The characteristics and disadvantages of the conventional energy-conducting pipe for energy conduction are: because a casing surrounding the system device is employed for thermal heat transfer, in addition to the greater volume and weight, it still has the defects that the heat conduction efficiency is low and a scale is easily accumulated, inconveniently for clean and even must be solved through replacing the equipment which is actually a resource waste.

Another method is a plate heat exchanger. Although it has a smaller volume and a better conduction, a pressure drop problem will still reduce the entire system efficiency.

Thus, it can be seen, the prior art described above still has some defects, is not a good design, however, and is urgently to be improved.

Because of the technical defects of described above, the applicant keeps on carving unflaggingly to develop an energy-conducting pipe for rapid energy conduction through wholehearted experience and research.

### SUMMARY OF THE INVENTION

One object of the present invention is to provide an energy-conducting pipe for rapid energy conduction which can rapidly disperse the heat produced from the equipment in the system and simultaneously promote the efficiency of the entire system so as to increase the life time of other machine parts in the system and also reduce the production cost.

Another object of the present invention is to provide an energy-conducting pipe for rapid energy conduction whose stainless steel energy-conducting pipe has already been passivated so that hydrogen and scale will not easily be generated so as to reduce the resistance as heat exchanged in the pipe, and the conduction efficiency can be improved simultaneously. And, because a clean or exchange may not needed even after a long time usage, the cost is relatively reduced and the entire efficiency is also improved.

Still another object of the present invention is to provide an energy-conducting pipe for rapid energy conduction whose liquid filler comprises a methanol, an ethanol and pure water, which all have a good volatility, so that when the liquid filler in the stainless steel pipe is heated, the heat transfer coefficient can be increased through the speedy movement of the liquid filler owing to the good volatility. Therefore, the convection and conduction both can be increased.

For achieving the purposes described above, the energy-conducting pipe for rapid energy conduction is a hollow stainless steel pipe which is passivation treated, can accommodate a filler thereinside and is sealed by an argon welding. The filler is a refrigerant or a filler comprising a methanol, an ethanol and a pure water in a proper proportion and is disposed into said pipe through a high pressure accommodation or a siphon, wherein the filler has a composition of a methanol of approximately 30 wt%, an ethanol of approximately 40 wt% and a pure water of approximately 30 wt%. The energy-conducting pipe of the present invention undergoes a passivation treatment, which is a process of metal electrochemically treatment for changing the metal surface of the stainless steel pipe, to possess a surface passivation film with some characteristics of noble metals.

### BRIEF DESCRIPTION OF THE DRAWINGS

The drawings disclose an illustrative embodiment of the present invention which serves to exemplify the various advantages and objects hereof, and are as follows:
Fig. 1(a)~1(b) are cross-sectional views showing a stainless steel energy-conducting pipe for rapid energy conduction according to the present invention;

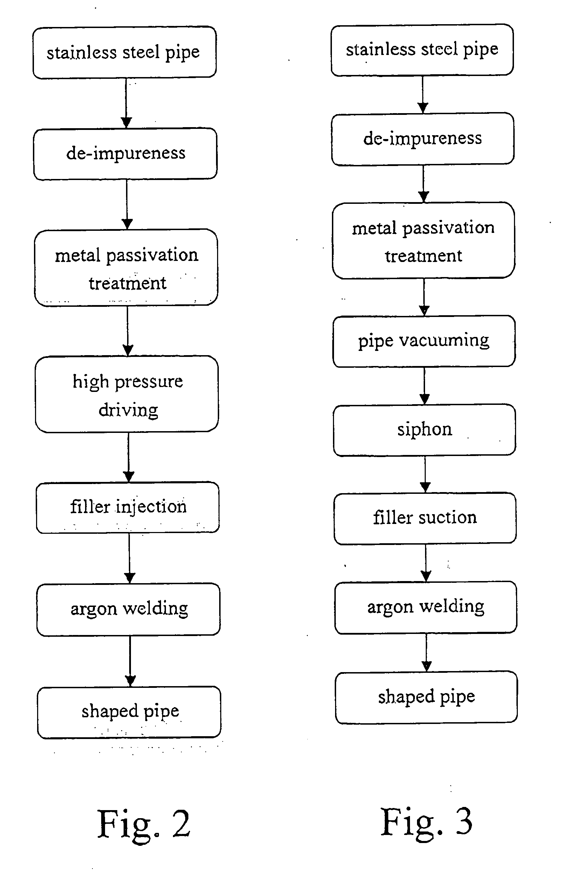

Fig. 2 is a flow chart showing a high-pressure injection of the energy-conducting pipe for rapid energy conduction according to the present invention; and
Fig. 3 is a flow chart showing a vacuum suction of the energy-conducting pipe for rapid energy conduction according to the present invention.

### DETAILED DESCRIPTION OF THE PREFERRED EMBODIMENT

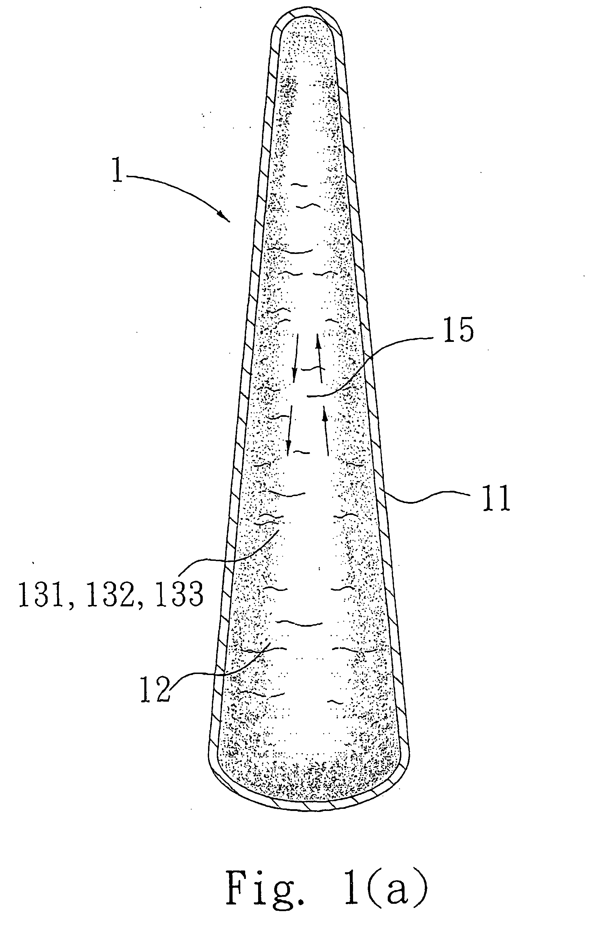

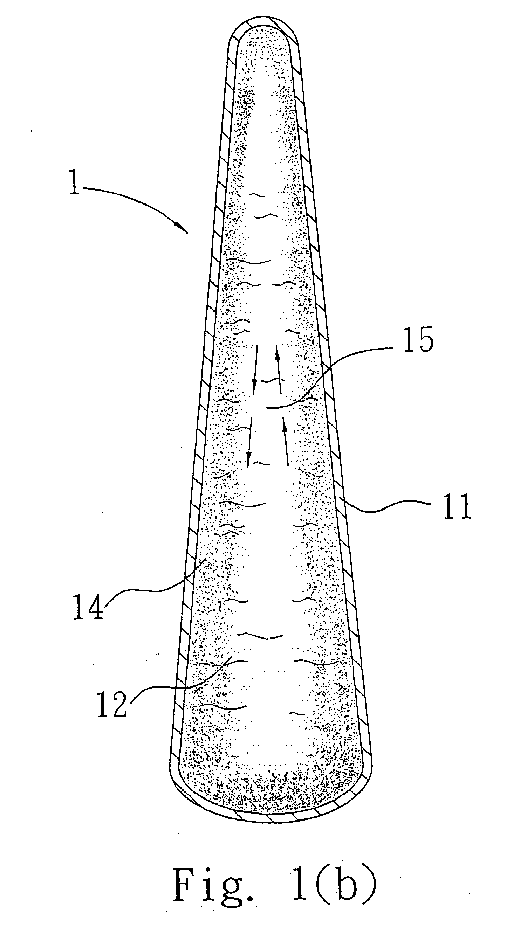

Please refer to Fig. 1(a) and 1(b), the energy-conducting pipe for rapid energy conduction of the present invention mainly includes a liquid filler 12, and this new filler 12 is composed of approximate 30 wt% of methanol 131, approximate 40 wt% of ethanol 132 and approximate 30 wt% of pure water.

The energy-conducting pipe 1 employs a refrigerant 14 or a filler 12 comprising a methanol 131, an ethanol 132 and a pure water 133 in a proper proportion as the filler thereinside, and the filler 12 is disposed into a passivated stainless steel pipe 11 through a high pressure accommodation or a siphon. The stainless steel pipe 11 of the present invention undergoes a metal passivation treatment, which is a process of metal electrochemically treatment for the surface of the stainless steel pipe 11, to possess some characteristics of noble metals (low erosion rate and positive electrode potential), so that the stainless steel pipe 11 will possess a passivation film with a destroy-resistance. That's because the passivation film has a structure resisting a diffusion of the erosive anion, an extension resisting mechanical destruction, a low dissolution, a low electron conductivity and a good re-passivation ability.

After the stainless steel pipe 11 is passivated and the filler 12 is disposed thereinto through a high pressure accommodation or a siphon, the energy-conducting pipe 1 is sealed through an argon welding or a plasma welding so that the liquid filler 12 can flow inside the pipe 1. When the pipe 1 is employed to transfer the heat and the liquid filler 12 inside the pipe 1 have some intermixed interfaces and flow in an orderly way, the flow of the liquid filler 12 will promote the temperature variation along the flowing direction, and thus, the temperature gradient of the wall can be increase so as to contribute heat conduction.

Either, when the interface of the liquid filler 12 inside the pipe 1 is under a random whirlpool movement, the heat transfer perpendicular to the flowing direct 15, in addition to transfer the heat, will also produce a convection for rapid heat transferring efficiency depending on a violent mixing between filler micro-masses with different temperatures.

The energy-conducting pipe for rapid energy conduction according to the present invention, when being compared with the other prior arts, further includes the advantages as follows:
1. The present invention provides an energy-conducting pipe for rapid energy conduction whose stainless steel pipe is passivated so that hydrogen and scale will not easily be generated and further the erosion rate, the dissolution rate and the electron conductivity all can be reduced, too. Therefore, it may not need a clean or exchange for the pipe even after a long time usage.
2. The present invention provides an energy-conducting pipe for rapid energy conduction whose liquid filler can increase the heat transfer coefficient and therefore the convection and conduction when the liquid filler in the stainless steel pipe is heated so that the heat energy can be rapidly transferred.

Many changes and modifications in the above described embodiment of the invention can, of course, be carried out without departing from the scope thereof. Accordingly, to promote the progress in science and the useful arts, the invention is disclosed and is intended to be limited only by the scope of the appcndcd claims.

## Claims

1. An energy-conducting pipe for rapid energy conduction,
**characterized in that**:
said energy-conducting pipe is a hollow stainless steel pipe which is passivation treated, accommodates a filler thereinside and is sealed, and said filler is a refrigerant or a filler comprising a methanol, an ethanol and a pure water in a proper proportion, wherein said filler has a composition of a methanol of approximately 30 wt%, an ethanol of approximately 40 wt% and a pure water of approximately 30 wt%.

2. The energy-conducting pipe for rapid energy conduction as in claim 1, wherein said filler is disposed into said pipe through a high pressure accommodation or a siphon after said pipe is pumped into a vacuum state.

3. The energy-conducting pipe for rapid energy conduction as in claim 1, wherein said pipe is sealed through an argon welding or a plasma welding.
